# EUROPEAN PATENT APPLICATION

(11) **EP 3 438 375 A1**
(43) Date of publication of application: **06.02.2019**
(21) Application number: 17184366.7
(22) Date of filing: 01.08.2017
(51) Int. Cl.: E04G 3/24, E04H 15/20, F03D 80/50, E04G 3/30

(54) **METHODS AND SYSTEMS FOR PERFORMING ROPE ACCESS MAINTENANCE OPERATIONS IN VERTICAL STRUCTURES**

(71) Applicant: Pressurehab Services Ltd, London N1 7GU (GB)
(72) Inventor: TWICKLER, Hermann, 03540 Alicante (ES)
(74) Representative: Igartua, Ismael

(57) **Abstract**

An enclosure for performing rope access maintenance operations in vertical structure is provided. The enclosure may comprise a top frame, a base frame and a cover extending from the top frame to the base frame and configured to surround a portion of a vertical structure and to define an internal working area around the portion of the vertical structure for performing rope access maintenance operations in the portion of the vertical structure. The enclosure may additionally comprise a top closure connected to the top frame and inwardly extending from the top frame for at least partially closing the enclosure and a base closure connected to the base frame and inwardly extending from the base frame for at least partially closing the enclosure. Furthermore, the enclosure may comprise a pressurization system for internally pressurizing the enclosure. Methods for performing rope access maintenance operations in a vertical structure are also disclosed.

## Description

The present disclosure relates to an enclosure for performing rope access maintenance operations in a vertical structure and methods for performing access maintenance operations in vertical structure using such an enclosure.

### BACKGROUND

Maintenance operations in vertical structures, such as tall buildings or chimneys, are normally performed by mounting scaffold structures or by using temporary working platforms. Working platforms may be lifted by using heavy and expensive cranes or may be temporarily hoisted from the vertical structure. Hoisting a working platform from a vertical structure may involve reinforcing part of the vertical structure. Preparing cranes or temporary working platforms may involve a long time and therefore performing maintenance or repairing operations may be costly.

For example, performing maintenance operations in wind turbine blades by using working platforms generally requires reinforcing the wind turbine rotor hub or using large cranes. Modern wind turbines are commonly used to supply electricity into the electrical grid. Wind turbines generally comprise a rotor mounted on top of a wind turbine tower, the rotor having a rotor hub and a plurality of blades. The rotor is set into rotation under the influence of the wind on the blades. The operation of the generator produces the electricity to be supplied into the electrical grid. Wind turbines may be installed on land, i.e. onshore wind turbines, or in the sea, i.e. offshore wind turbines. Using such large cranes in offshore wind farms may be complex and special boats are required for transporting such cranes from a port to the offshore wind turbine.

Wind turbine blades generally include a suction side and a pressure side connected along a leading edge and a trailing edge. Wind turbine blades are typically made from fiber-reinforced composites which are composites having a polymer matrix and fibers. Some examples of fiber-reinforced composites may be glass fiber reinforced plastics (GFRP) or carbon fiber reinforced plastics (CFRP). Manufacturing these blades may involve using pre-impregnated ("prepeg") materials and resin infusion techniques and may require drying and curing operations. Additionally, blades may be coated by a protective coating.

Wind turbine blades are subjected to cyclical loads and to extreme loads. Such loads may generate excessive deformation and cracks, e.g. microcracks may occur. Microcracks may evolve to cracks which may affect the structural integrity of the blade. In addition, wind turbine blades may be subjected to harsh environmental conditions: differential temperature, ice formation in cold climates, excessive sand in dessert locations and excessive humidity and salt in offshore or in near shore locations. These conditions may accelerate wear of the blade, in particular on the leading edge of the blade. Such a wear may damage the coating of the blade which may drastically affect the evolution of the cracks. Furthermore, wear of blades may negatively affect the performance of the wind turbine and therefore the output power. Therefore, blades have to be periodically inspected and it is necessary to repair the blades when these defects occur.

Repairing techniques for rotor blades may commonly include grinding out defective regions by e.g. using cleaning solutions, applying a composite material and coating the defective area. Curing and/or drying the composite material may be required when a composite material is applied. Coating may comprise applying several layers of protective coatings and/or paints. A climate controlled environment may be required for effectively applying these materials.

Working platforms used for performing maintenance or repairing operations in wind turbine blades may be self-supporting and the weight may thus be considerable. In some examples, these working platforms may weigh around 20.000 kg. Additionally, temporary working platforms may not be suitable for different blades since wind turbine blades from different wind turbines may have a different curvature, e.g. a prebend configuration, shape and size.

Additionally, wind turbines may be erected in non-easily accessible locations for large cranes, such as in mountainous regions or offshore wind farms. Transporting large cranes to offshore wind turbines or from one offshore wind turbine to another one may typically involve using special boats having a long waiting list.

Another example of vertical structures may be high communication or television towers. Erection of new cell phone towers are generally difficult and therefore service life of existing cell phone towers needs to be extended. Some of these existing cell phone towers are made from steel. Therefore, welding operations for repairing the existing cell towers is required. However, as such towers comprise lots of inflammable cables, welding operations in the existing cell towers may be dangerous and may result in fire. For this reason, composites have been introduced for repairing these towers. Applying these composites may require maintaining a controlled atmosphere on the area to be repaired. As some of these towers are placed on densely populated areas, large cranes are not suitable for performing these operations. In addition, some cell towers cannot operate under normal conditions while it is being repaired, therefore in order to minimize the impact on the final user, repairing operations have to be quickly performed.

Some communication or television towers are made from composite materials, especially some singular communication towers. Some of these singular communication towers are icons of the skyline of some cities. Such communications towers have to be regularly maintained, e.g. inspected or repaired, in order to make sure that they will withstand during the whole design lifetime or even more. Repairing these towers may comprise applying composites at the repairing area in a controlled atmosphere. However, as these towers have a considerable diameter, controlling the atmosphere on the repairing area is difficult and may generally involve the use of large platforms surrounding the tower. Such large platforms may be permanently mounted, increasing the cost of the vertical structure, or temporarily mounted. Temporarily mounting these platforms may require a long time.

An alternative to temporary working platforms or to large cranes may be using harness and ropes for supporting operators to carry out maintenance and repair work. These access techniques are commonly known as "rope access". In this way, no reinforcement of the vertical structure is required, e.g. the wind turbine hub or the wind turbine tower does not need to be reinforced. In addition, no heavy machinery or maintenance apparatus are required.

However, these accessing systems to vertical structures may be limited to weather conditions and cannot be used in adverse weather conditions such as snow, cold temperatures, rain or heavy winds.

For example, using these known accessing systems may be limited to low wind speeds, since platforms or cranes may accidentally be subjected to a wind gust and may impact the structure, e.g. the wind turbine blade. In addition, maintenance operations in some vertical structures, e.g. repairing operations, may be dependent on weather conditions such as temperature, humidity and solid particles dissolved in air, e.g. salt or dust. For example, wind turbine repair is very weather dependent. Conditions like wind, rain, temperature and humidity are significant factors for the access system, e.g. rope access, and the wind turbine operator, as repair conditions are not predictable. As a result, the time window for performing maintenance operations in vertical structures, e.g. in wind turbine blades, is very limited and difficult to be scheduled in advance.

The present disclosure provides examples of systems and methods that at least partially resolve some of the aforementioned disadvantages.

### SUMMARY

In a first aspect, an enclosure for performing rope access maintenance operations in vertical structure is provided. The enclosure comprises a top frame, a base frame and a cover extending from the top frame to the base frame and configured to surround a portion of a vertical structure and to define an internal working area around the portion of the vertical structure for performing rope access maintenance operations in the portion of the vertical structure. The enclosure additionally comprises a top closure connected to the top frame and inwardly extending from the top frame for at least partially closing the enclosure and a base closure connected to the base frame and inwardly extending from the base frame for at least partially closing the enclosure. Furthermore, the enclosure comprises a pressurization system for internally pressurizing the enclosure.

In this aspect, the enclosure allows performing rope access maintenance operations in a vertical structure, for example in wind turbine blades or in communication or television towers. Therefore, no large and heavy cranes and reinforcing the structure, e.g. the wind turbine hub or the wind turbine nacelle, are required. Therefore, the maintenance operations may be performed in less time and thus the cost of these operations can be reduced. Additionally, since the structure does not need to be reinforced, the structure, e.g. the wind turbine hub, and the manufacturing cost of the whole structure, e.g. a wind turbine, may be optimized. Performing rope access maintenance operations inside the enclosure allows several operators working at the same time, for example at different heights or at different sides.

In addition, a quick access for operators is provided. Efficiency of maintenance operations may therefore be improved.

Furthermore, the enclosure protects both the operator(s) working inside the enclosure and the region of the structure being repaired. As a result, maintenance operations may be performed even if it is snowing or raining or if temperatures are very low. The time window for performing these operations may thus be increased in a safe manner. In addition, these operations may be precisely scheduled in advance.

Pressurizing the enclosure increases the structural stability and allows controlling the air inside the enclosure. Increasing the structural stability allows performing maintenance operations with relatively high winds, or at least higher than in the known systems. Additionally, such an internal pressurization allows keeping a relatively constant gap between the structure and the cover even if the enclosure is subjected to relatively high winds. Therefore, risk of impacting or contacting the enclosure against vertical structure, e.g. wind turbine blade, is reduced and the curing process may thus not be negatively affected. Furthermore, pressurizing the enclosure allows minimizing the influence of the external factors on the working conditions, e.g. on the environmental conditions inside the enclosure.

Consequently, the time windows for performing maintenance operations in vertical structures are increased. In case of repairing wind turbine blades or repairing vertical structures involving the use of composites, the enclosure may also optimize the drying and curing or processes of the fibers and coatings applied. Repairing time may thus be reduced. Total time for performing maintenance operations may be reduced and the energy produced by a wind turbine may therefore be increased. The quality and consistency of the repair may also be increased, as operators and the (fresh) repair area are no longer subject to the elements.

In some examples, the pressurization system may be configured to provide an overpressure with respect to outside the enclosure between 25 Pa and 350 Pa, i.e. the pressure inside the enclosure is between 25 Pa and 300 Pa higher than the pressure outside the enclosure. Optionally, the overpressure may be comprised between 50 Pa and 200 Pa. Such an overpressure provides a better stability which allows working during relatively high wind speeds, for example up to 12 m/s.

In some examples, such an overpressure may be provided by a fan system. The fan system may be configured to supply airflow for providing a pressure inside the enclosure up to 350 Pa higher than the pressure outside the enclosure. The airflow required for providing such an overpressure may depend on the size of the enclosure and on how it is sealed.

In some examples, the fan system may be configured to provide airflow between 0,9 m³/s and 1,3 m³/s, and optionally between 1,05 m³/s and 1,1 m³/s. Such airflow may be sufficient to provide an overpressure up to 350 Pa inside the enclosure, when for example the enclosure is used in a wind turbine blade.

In some examples, the enclosure may comprise an air conditioning system for controlling the air inside the enclosure, i.e. on the habitat inside the enclosure. Controlling the air condition inside the enclosure may allow performing maintenance operations, e.g. repairing a blade, more efficiently.

In some examples, the air condition system may be configured to maintain a temperature inside the enclosure between 15°C and 35°C. Curing and drying fibers and coatings applied for repairing a tower using composites or a wind turbine blade, e.g. the leading edge of a wind turbine blade, may require a temperature comprise between 15°C and 35°C, and optionally between 20°C and 30°C. Since this temperature ranges are independent from the external conditions, the air condition system may comprise a heater and/or a cooler. For example, in cold days the air condition system may increase the temperature to a range of 15°C and 35°C.

Alternatively or additionally, the air condition system, e.g. comprising a heater and/or a cooler, may be configured to maintain air humidity inside the enclosure of less than 75%, and optionally of less than 70%. Relatively low air humidity, e.g. lower than 75% may be necessary for curing and drying fibers and coatings applied at repairing the vertical structure, e.g. a wind turbine blade. Moisture may be a problem, in particular in offshore wind turbines, since external humidity may be high in some offshore locations, e.g. around 85% - 99%.

By using an air condition system combined with the pressurization system, the parameters of the air inside the enclosure for repairing a vertical structure, e.g. a wind turbine blade, are adjusted for increasing the efficiency and quality of the drying and curing process. The structural behavior of the repaired vertical structure, e.g. a wind turbine blade may thus be enhanced compared to those cases where the working area is not pressurized. Maintaining these working conditions require to enclose and to pressurize the working area for minimizing the influence of the external factors on the working conditions, e.g. on the habitat inside the enclosure. The pressurization system may allow the air conditioning system to maintain the temperature and/or the humidity inside the enclosure efficiently, minimizing the external factors and the temperature and/or humidity losses produced by not having a pressurized atmosphere.

In a further aspect, a method for performing rope access maintenance operations in a vertical structure is provided. The method comprises providing an enclosure according to any of the examples herein disclosed. The method additionally comprises lifting and positioning the enclosure for surrounding a portion of a vertical structure to a desired position and closing the enclosure for defining a substantially enclosed internal working area. Furthermore, the method comprises providing access to the enclosure on rope and pressurizing the internal working area inside the enclosure by activating the pressurization system.

### BRIEF DESCRIPTION OF THE DRAWINGS

Non-limiting examples of the present disclosure will be described in the following, with reference to the appended drawings, in which:
Figure 1 schematically shows an example of an enclosure for performing rope access maintenance operations in a communication tower;
Figure 2 schematically shows an example of an enclosure for performing rope access maintenance operations in a wind turbine blade;
Figure 3 shows a lower portion of an enclosure according to one example;
Figure 4 shows an upper portion of an enclosure according to one example;

### DETAILED DESCRIPTION OF EXAMPLES

In these figures the same reference signs have been used to designate matching elements.

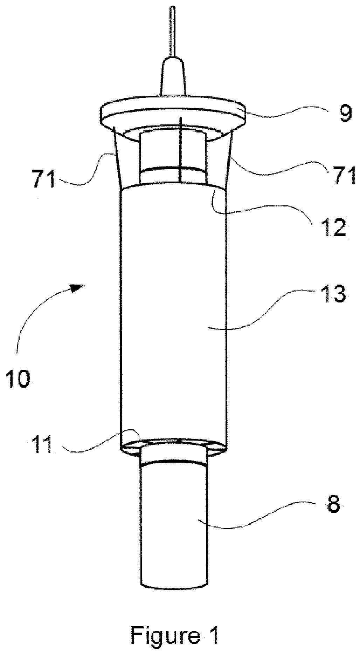

Figure 1 schematically represents an enclosure 10 for performing rope access maintenance in a communication tower 8. The communication tower of the Figure 1 is made from composites. The enclosure 10 comprises a base frame 11 and a top frame 12 and a cover 13 extending from the top frame 12 to the base frame 11. The cover 13 is configured to surround a portion of a vertical structure, e.g. a tower made from composites, and to define an internal working area around a portion of the vertical structure for performing rope access maintenance operations in the portion of the vertical structure.

Although not represented in Figure 1, the enclosure comprises a top closure 30 connected to the top frame 12 and inwardly extending form the top frame 12 and a base closure 20 connected to the base frame 11 and inwardly extending from the base frame 11 for at least partially closing the enclosure.

The enclosure 10 also comprises a pressurization system for internally pressurizing the enclosure according to any examples herein described.

The enclosure of Figure 1 is supported by two wire ropes 71 anchored to the top floor 9 of the communication tower 8.

In some examples, the top and the base frame may comprise two profiles removably connected to each other. In addition, the cover may comprise a removable connection for enclosing a portion of the communication tower 8. Therefore, the enclosure may completely enclose a portion of the vertical structure and the working area can be pressurized.

Operators may be supported by ropes secured in the top floor 9 and may access the enclosure. Operators performing rope access maintenance operations may therefore descend from top floor 9 to inside the enclosure.

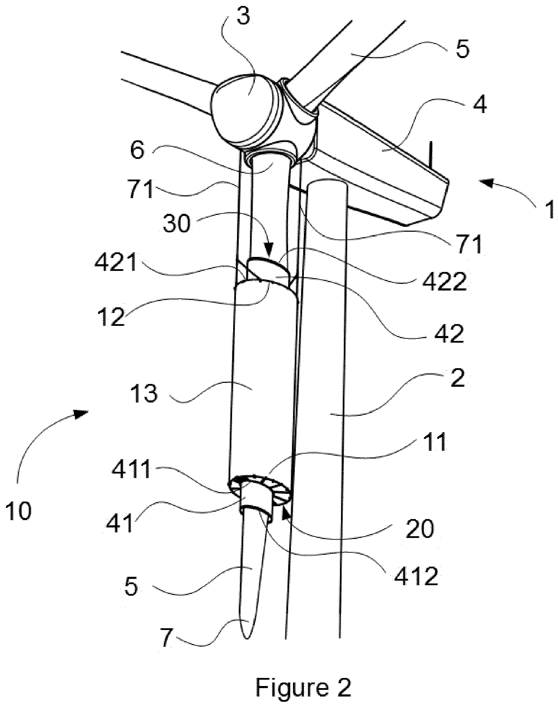

Figure 2 shows an enclosure 10 for performing rope access maintenance operations in a wind turbine blade 5 of a wind turbine 1. In Figure 2, the wind turbine 1 comprises a rotor mounted on top of a wind turbine tower 2 having a rotor hub 3 and a plurality of blades 5 and a nacelle 4 for placing a generator. Wind turbine blades longitudinally extend from a blade root 6, i.e. the portion of the blade connected to the hub, to a blade tip 7.

The enclosure 10 comprises a base frame 11 and a top frame 12 and a cover 13 extending from the top frame 12 to the base frame 11. The cover 13 is configured to surround a portion of a vertical structure, in Figure 2 a wind turbine blade 5, and to define an internal working area around a portion of the vertical structure for performing rope access maintenance operations in the portion of the vertical structure, e.g. the wind turbine blade 5.

Furthermore, the enclosure 10 comprises a top closure 30 connected to the top frame 12 and inwardly extending, i.e. towards the wind turbine blade, from the top frame 12 for at least partially closing the enclosure 10. The enclosure further comprises a base closure 20 connected to the base frame and inwardly extending from the base frame 11 for at least partially closing the enclosure.

Although not shown in Figure 2, the enclosure 10 additionally comprises a pressurization system for internally pressurizing the enclosure according to any examples herein described.

The enclosure of Figure 2 is supported by two ropes 71 anchored to the wind turbine hub 3. These ropes may be wire ropes, cables or textile ropes. The ropes, e.g. wire ropes, may be connected to the top frame 12. Each of these two ropes may terminate in two slings. The top frame 12 may comprise anchoring elements for connecting the ropes, e.g. anchoring or securing the slings. These anchoring elements may be for example carabiners or coeur hangers.

The wind turbine hub may comprise anchoring elements for securing one end of the ropes that support the enclosure. In some examples, such anchoring elements may be permanently mounted on the hub. Alternatively, temporary anchoring elements may be mounted on the hub for supporting the enclosure such as suction cups.

In some examples, ropes supporting the enclosure may be moved up and down by a winch. Winches may be temporarily or permanently mounted on the hub or inside the nacelle. In this way, the enclosure may be placed on the floor level and then hoisted from the hub. The enclosure may be lifted surrounding the vertical structure.

Operators may be supported by ropes secured for example in the hub and may access the enclosure. Operators performing rope access maintenance operations may therefore descend from the hub to inside the enclosure.

In the example of Figure 2, the enclosure encloses a portion of the blade near to the tip blade 7. The area near the tip blade is typically the portion of a blade which is subjected to more wear, in particular the leading edge of the tip area. In some examples, the cover may have a length between 5 meters and 15 meters, and optionally approximately 10 meters, i.e. the distance between the top 12 and the base 11 frame.

In some examples, the enclosure may be configured to surround a portion of a wind turbine at any height of the blade. The top frame may thus be positioned on the root region.

Alternatively, the enclosure may be configured to surround a portion of the wind blade located at any height from the tip portion to approximately a center portion of the blade along the longitudinal axis of the blade. For example, the maximum distance from the top frame to the blade tip may be approximately comprised between 30 meters and 20 meters. According to this aspect, the shape and size of the enclosure may be more efficiently adapted to the shape and the curvature of the wind turbine from a substantially central portion to the tip portion.

In the example of Figure 2, the enclosure comprises a top extension 42 having a first end 421 connected to the top closure 30 and a second end 422 configured to engage a section of the vertical structure, e.g. a wind turbine blade 5. The second end 422 may thus close the upper portion of the enclosure. In some examples, the second end 422 may comprise a ratchet strap for engaging the shape of the second end 422 of the top extension 42 to the shape of the vertical structure, e.g. a wind turbine blade 5. In some examples, the ratchet strap may be adjusted or tightened by an operator from inside the enclosure or from outside the enclosure. In other examples, other adjustable elements such as belts, slings, ropes or the like may alternatively be used.

In these examples, the top closure 30 partially closes the enclosure, i.e. the upper portion of the enclosure. According to this aspect, the top closure 30 reduces the diameter of the cover 13 for at least partially closing the enclosure. Therefore, the upper portion of the enclosure of Figure 2 is closed by the reduction of the diameter of the cover 13 made by the top closure 30 and by the engagement of the second end 422 of the top extension 42 to the blade. According to this aspect, the upper portion of the enclosure may be adjusted to different blade sections and the upper portion of the blade may be closed in different blade sections, i.e. may be adjusted to different vertical structure shapes.

Alternatively, the top closure 30 may close the upper portion of the enclosure. In this way, the top closure 30 may be adjusted to the external shape of the wind turbine blade. In some of these examples, the top close may comprise adjusting elements as for example ratchet straps, belts, ropes or the like.

Furthermore, the enclosure 1 of Figure 2 comprises a base extension 41 having a first end 411 connected to the base closure 20 and a second end 412 configured to engage a section of the wind turbine blade 5. Adjusting the shape of the enclosure to the vertical element to be enclosed may thus be improved. Similar to the top extension, the base extension 41 may comprise an adjustable element for adjusting the shape of the base extension 41 to the blade 5, i.e. for engaging the blade. An adjustable element may be for example a ratchet strap, a belt, a sling, a rope or the like. Alternatively, the base closure 20 may close the bottom portion of the enclosure. The base closure may therefore be adjusted to the external shape of vertical structure, e.g. the wind turbine blade, and may comprise adjusting elements according to any of the examples herein described.

In some examples, base closure 20 and/or the base extension 41 may be closed over itself. According to this aspect a tip portion of a wind blade may be entirely surrounded by the enclosure.

In some examples, despite providing protection against the weather conditions and closing the enclosure for maintaining a controlled pressure inside, the enclosure may be not fully and hermetically sealed. There may be some minor air leakage. However, this air leakage does not affect dramatically the pressure control and may have some benefits. For example gases produced during repairing tasks may be evacuated. In some examples some conduits may be provided in the enclosure for enhancing the evacuation of gases.

In some examples, the cover may be an elliptical cylinder. The base extension and/or the top extension may be a cone or a truncated cone, wherein the greater diameter is of the first end. The diameter of the first end of the base extension or of the first end of the top extension may be smaller than the diameter of the elliptical cylinder.

In some examples, the cover 13 may be made from plastic and/or fabrics, as for example a PVC-coated polyamide fabric. The cover may thus be flexible and impermeable at the same time that it may have enough stiffness when pressurized for withstanding wind loads. Additionally, these materials allow folding the enclosure, e.g. as a doughnut, for being transported or hoisted. In some examples, the top 30 and bottom closure 20 may be made from plastics and/or fabrics. The top 12 and/or the base frame 11 may be made from steel for providing stiffness the enclosure.

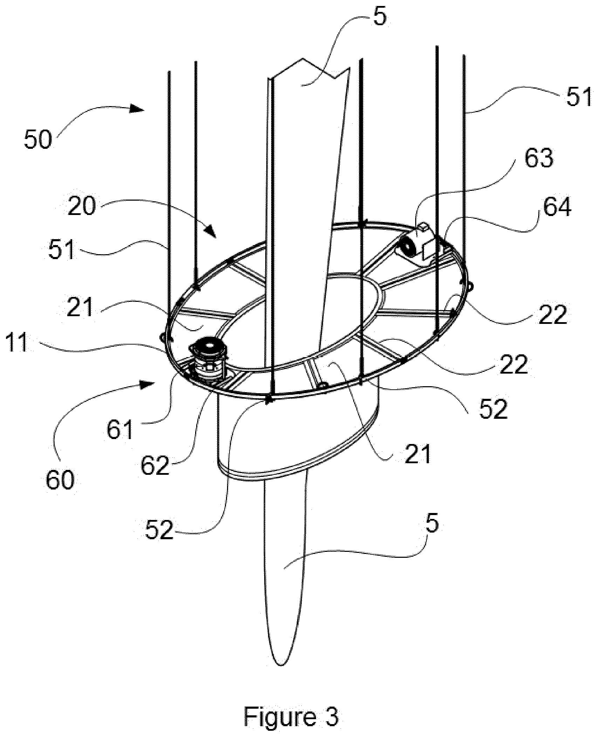

Figure 3 shows a lower portion of an enclosure 1 according to one example. A cover has not been represented in Figure 3 for clarity purposes, however shall be understood that portion of the enclosure illustrated in Figure 3 comprises a cover.

The enclosure of Figure 3 comprises a set of tensioning elements 50 connecting the top frame to the base frame. These tensioning elements may improve the stiffness of the enclosure and the enclosure may withstand higher loads. The structural behavior of the enclosure may be improved by the combination of the tensioning elements and the pressurized cover.

In Figure 3, the set of tensioning elements 50 comprises eight tensioning elements 51. The base frame 11 comprises 8 anchoring elements 52 for securing the tensioning elements 51 to the base frame 11. In addition, the top frame may comprise eight anchoring elements for securing the other end of the tensioning elements to the top frame. In other examples, instead of a set of eight tensioning elements, the set may comprise less than eight, e.g. from three to seven, or more than eight, e.g. from nine to twenty four.

In some examples tensioning elements may be a cable or a wire rope. Tension of the tensioning elements may be provided by the weight of the enclosure or by additional elements arranged for example on the anchoring elements which may control the tension, i.e. the elongation of the tensioning elements. Therefore, the tension of the tensioning elements may be controlled.

In some examples, the enclosure may comprise a positioning system connected the base frame and configured to engage at least one tensioning element of the set of tensioning elements for displacing the base frame with respect to the top frame. A tensioning element may run through the positioning system when the positioning system is in an unblocking position and it is blocked when the positioning system is in a blocking position. Therefore, the distance between the top frame and the base frame may be controlled.

In some examples, the enclosure may be hoisted while the enclosure is folded, i.e. with top frame close to the base frame. Short slings may be used to maintaining the enclosure folded. Then, after placing the top frame in a correct position, a tensioning element may run through the positioning system and the base frame may therefore be lowered. The base frame may be positioned at a desired distance with respect to the top frame. Then, the tension of the tensioning elements may be adjusted.

In some examples, the cover may comprise guides for guiding the tensioning elements. These guides may be in form of hooks. In some examples, the cover may comprise light supports for connecting lights. By using lights inside the enclosure allows performing maintenance operations having a poor illumination, e.g. at night. Efficiency of these operations may thus be improved.

The enclosure of Figure 3 comprises a pressurization system 60 comprising a fan system 61 according to any of the examples herein disclosed. The enclosure may additionally comprise a pressurization system support 62 connected to the base frame 11 for supporting the pressurization system 60. In addition, the enclosure may comprise an air conditioning system 63 according to any of the examples herein disclosed and an air conditioning system support 64 connected to the base frame 11.

In some examples, the base closure 20 may comprise at least two base closure panels 21 that are removably connected to each other for providing an emergency exit. The base closure 20 of Figure 3 comprises eight base closure panels 21. In other examples, instead of eight base closure panels, the base closure may comprise one or more panels, for example four. These base closure panels 21 are removably connected to each other, e.g. by hook and loop fasteners. Hook and loop fasteners are commonly known as Velcro^{®}. In this way, base closure panels may comprise hook and loop fasteners 22. In some examples, the base closure panels or the whole base closure may be removably connected to the base frame 11 in a similar way as are connected to each other, e.g. by using hook and loop fasteners. In other examples, instead of hook and loop fasteners other quick removably connectors may be used as for example zip fasteners.

Removably connecting the base closure 20 to the base frame 11 or the base closure panels 21 to each other or to base frame 11, provides a quick exit for leaving the enclosure in a safe and in a quick way. Safety of the operators may thus be improved.

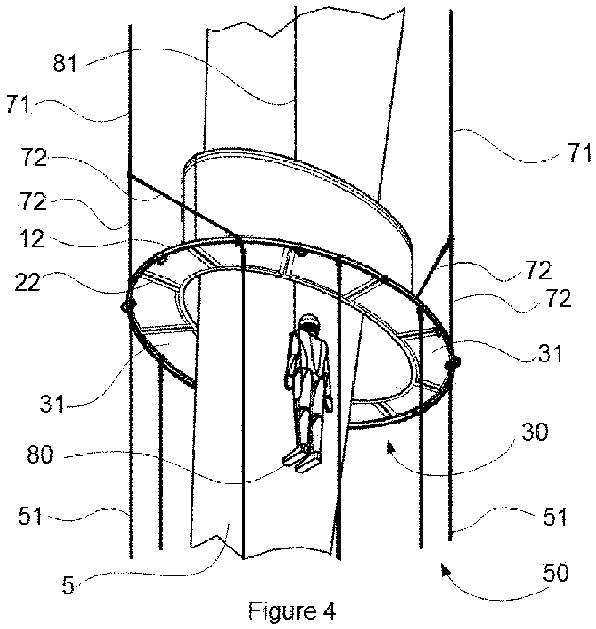

Figure 4 shows an upper portion of an enclosure 1 according to one example. A cover has not been represented in Figure 4 for clarity purposes, however shall be understood that portion of the enclosure illustrated in Figure 4 comprises a cover.

As described with respect to the Figure 3, the enclosure of Figure 4 comprises a set of tensioning elements 50 having tensioning elements 51 connecting the top frame to the base frame. In a similar way than with respect to base frame, the top frame 12 may comprise anchoring elements for securing the tensioning elements 51 to the to frame 12.

In some examples, the top closure 30 may comprise at least two top closure panels that are removably connected to each other for providing an emergency exit. The top closure 30 of Figure 4 comprises eight base closure panels 31. Alternatively, the top closure may comprise a different number of top closure panels.

As with respect to the base closure panels, the top closure panels may be removably connected to each other by hook and loop fasteners 22 or by other quick removably connectors.

The enclosure of Figure 4 is supported by two ropes 71, each of them having two slings 72 which are connected to the top frame 12. In this way, the top frame may comprise anchoring elements for connecting the ropes 71, e.g. through the slings 72, to the top frame 12.

An operator 80 enclosed in the enclosure is schematically represented in Figure 4, i.e. in an internal working area around a portion of a vertical structure. The operator is positioned inside the enclosure for performing rope access maintenance operations in the portion of the vertical structure, e.g. a wind turbine blade. The operator 80 is supported by a rope 81 or a cable and can be moved up and down along this rope. In addition, the operator may also move horizontally to reach at the desired position.

In a further aspect, a method for performing rope access maintenance operations in a vertical structure is provided. The method comprises providing an enclosure according to any of the examples herein disclosed. The method additionally comprises lifting and positioning the enclosure for surrounding a portion of a vertical structure to a desired position and closing the enclosure for defining a substantially enclosed internal working area. Furthermore, the method comprises providing access to the enclosure on rope and pressurizing the internal working area inside the enclosure by activating the pressurization system.

In some examples, before lifting the enclosure, two operators may move on ropes to the highest position of the enclosure when lifted.

In some examples, the method may additionally comprise installing a winch or couple of winches on the upper portion of the vertical structure, e.g. a wind turbine hub or a top floor of a composite tower. A cable engaging the winch may be connected to the top frame. The enclosure may thus be lifted by action of the winch(es). These winches may be remotely controlled.

In some examples, lifting and positioning the enclosure may additionally comprise securing the top frame to the base frame, by e.g. slings; lifting the enclosure from the top frame to a desired position and disconnecting the base frame from the top frame and lowering the base frame with respect to the top frame. In this way, the enclosure may be lifted folded by securing the top frame to the base frame.

In some examples, the base frame may be lowered with respect to the top frame by using a positioning system for fully extending the cover. This positioning system may be manually controlled by the operators on ropes.

In some the operators may adjust the tension of the set of the tensioning elements. Adjusting the tension may be performed from outside or from inside the enclosure.

In some examples, before pressurizing the internal working area, the operators may access the enclosure through the top closure and may close the enclosure, an access to the enclosure on rope is provided.

In some examples, closing the enclosure may be performed before providing access to the enclosure. Alternatively, in other examples, closing the enclosure may be performed after providing access to the enclosure.

In some examples, closing the enclosure for defining a substantially enclosed internal area may comprises adjusting a ratchet strap of the base extension and of the top extension. In some examples, adjusting the ratchet straps may be performed by the operators from inside the enclosure. Then, the pressurizing system may be activated.

After the pressure inside the enclosure reaches a desired pressure, the operators on ropes performs rope access maintenance operations in the vertical structure.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the clauses that follow.

## Claims

1. An enclosure for performing rope access maintenance operations in a vertical structure comprising:
a top and a base frame;
a cover extending from the top frame to the base frame and configured to surround a portion of a vertical structure and to define an internal working area around the portion of the vertical structure for performing rope access maintenance operations in the portion of the vertical structure;
a top closure connected to the top frame and inwardly extending from the top frame for at least partially closing the enclosure;
a base closure connected to the base frame and inwardly extending from the base frame for at least partially closing the enclosure; and
a pressurization system for internally pressurizing the enclosure.

2. An enclosure according to claim 1, wherein the pressurization system is configured to provide an overpressure with respect to outside the enclosure between 25 Pa and 350 Pa, and optionally between 50 Pa and 200 Pa.

3. An enclosure according to claim 2, wherein the pressurization system comprises a fan system configured to provide airflow for providing an overpressure with respect to outside the enclosure up to 350 Pa, and optionally to provide airflow between 0,9 m³/s and 1,3 m³/s, and optionally between 1,05 m³/s and 1,1 m³/s.

4. An enclosure according to any of the preceding claims, wherein the enclosure comprises an air conditioning system for controlling the air inside the enclosure.

5. An enclosure according to claim 5, wherein the air conditioning system is configured to maintain a temperature inside the enclosure between 15°C and 35°C.

6. An enclosure according to any of claims 4 - 5, wherein the air conditioning system is configured to maintain air humidity inside the enclosure of less than 75%, and optionally of less than 70%.

7. An enclosure according to any of the preceding claims, wherein the enclosure comprises a set of tensioning elements connecting the top frame to the base frame.

8. An enclosure according to claim 7, wherein the enclosure comprises a positioning system connected to the base frame and configured to engage at least one tensioning element of the set of tensioning elements for displacing the base frame with respect to the top frame.

9. An enclosure according to any of the preceding claims, wherein the top closure comprises at least two top closure panels that are removably connected to each other.

10. An enclosure according to any of the preceding claims, wherein the base closure comprises at least two base closure panels that are removably connected to each other.

11. An enclosure according to any of claims 9 - 10, wherein the at least two top closure panels and/or the at least two base closure panels comprises hook and loop fasteners for removably connecting to each other.

12. An enclosure according to any of the preceding claims, wherein the enclosure comprises a top extension having a first end connected to the top closure and a second end configured to engage a section of a vertical structure and/or a base extension having a first end connected to the base closure and a second configured to engage a section of a vertical structure.

13. An enclosure according to any of the preceding claims, wherein enclosure is configured to perform rope access maintenance in a wind turbine blade.

14. A method for performing rope access maintenance operations in a vertical structure comprising:
providing an enclosure according to any of the preceding claims;
lifting and positioning the enclosure for surrounding a portion of a vertical structure to a desired position;
closing the enclosure for defining a substantially enclosed internal working area;
providing access to the enclosure on rope;
pressurizing the internal working area inside the enclosure by activating the pressurization system.

15. A method according to claim 14, wherein lifting and positioning the enclosure comprises:
securing the top frame to the base frame;
lifting the enclosure from the top frame to a desired position;
disconnecting the base frame from the top frame and lowering the base frame with respect to the top frame.
